# EUROPEAN PATENT APPLICATION

(11) **EP 2 890 132 A1**
(43) Date of publication of application: **01.07.2015**
(21) Application number: 14811750.0
(22) Date of filing: 25.04.2014
(51) Int. Cl.: H04N 19/85

(54) **VIDEO INFORMATION PROCESSING METHOD AND DEVICE**

(30) Priority: 22.11.2013 CN 201310601757
(71) Applicant: Huawei Technologies Co., Ltd., Longgang District Shenzhen, Guangdong 518129 (CN)
(72) Inventor: ZHOU, Hailin, Shenzhen, Guangdong 518129 (CN)
(74) Representative: Haley, Stephen
(86) International application number: PCT/CN2014/076218
(87) International publication number: WO 2015/074380

(57) **Abstract**

Embodiments of the present invention provide a video information processing method and device. The video information processing method includes: receiving, by a video information processing apparatus, a compressed code stream transmitted by a player, and transmitting the compressed code stream to a decoder; performing, by the decoder, decoding, and transmitting a video frame obtained by means of the decoding to the video information processing apparatus; transmitting, by the video information processing apparatus, the video frame to a postprocessing unit; and performing, by the postprocessing unit, postprocessing, and providing the postprocessed video frame to the player. In technical solutions of the present invention, the postprocessing on the video frame is implemented without greatly modifying a media processing system, thereby reducing a price for implementing video postprocessing, such as a cost and time.

## Description

This application claims priority to Chinese Patent Application No. 201310601757.1, filed with the Chinese Patent Office on November 22, 2013 and entitled "VIDEO INFORMATION PROCESSING METHOD AND DEVICE", which is incorporated herein by reference in its entirety.

### TECHNICAL FIELD

The present invention relates to communication technologies, and in particular, to a video information processing method and device.

### BACKGROUND

A media processing system generally includes components such as a player, a media source processing unit, a decoding unit, and a display unit. A general process of processing video information by the media processing system is: The player reads a media file from a network or a local storage module; specifically, the media source processing unit parses the media file, separates a compressed code stream from the media file, and inputs the compressed code stream into the player; the player sends the compressed code stream to the decoding unit; the decoding unit converts the compressed code stream into a video frame and inputs it into the player; the video frame undergoes audio and video synchronization and is then sent by the player to the display unit for displaying. In the foregoing process, the video frame is directly sent to the display unit for displaying after being obtained by decoding, which leads to an image quality problem such as inability to compensate for image quality losses caused by video compression and inability to improve image quality. Therefore, from a perspective of the image quality, it is suitable to display the video frame immediately after it is obtained by the decoding, the video frame needs to be processed properly, and the processing on the video frame after the decoding is "video postprocessing".

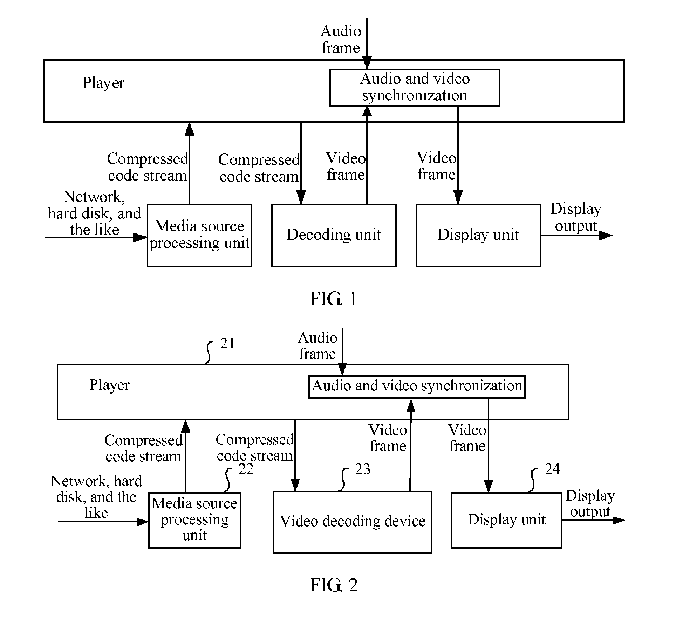

FIG. 1 is a schematic structural diagram of a media processing system in the prior art. In the media processing system shown in FIG. 1, the video frame is directly sent to the display unit for displaying after being obtained by the decoding, which leads to an image quality problem. For example, in the media processing system shown in FIG. 1, video compression leads to image quality losses that are primarily reflected by phenomena such as "blocking" and "ringing". Such phenomena may be effectively mitigated by means of video postprocessing, such as deblocking (deblocking) and deringing (deringing), after the decoding. For another example, in the media processing system shown in FIG. 1, subjective image quality cannot be improved after the decoding. In fact, after the decoding, the subjective image quality can be effectively improved by means of video postprocessing such as color enhancement, contrast enhancement and definition enhancement. For another example, in the media processing system shown in FIG. 1, if a video source is interlaced, it means that a time difference exists between a "top field" and a "bottom field" of the video frame (rows 0, 2, 4, 6... of the video frame are called a "top field" after being combined together, and rows 1, 3, 5,... of the video frame are called a "bottom field" after being combined together). For the video frame formed by the two fields, plenty of horizontal lines appear at the edge of a moving object, and, as an effect of a playing, it seems that two objects overlap partly. That is, the direct playing leads to "combing". This problem can be resolved by means of video postprocessing such as deinterlacing (de-interlace) after the decoding.

Generally, a video postprocessing function needs to be implemented by being integrated with some components in an existing media processing system. For example, the video postprocessing function may be implemented by being integrated into a display controller of the display unit in FIG. 1, or implemented by being integrated into a player in FIG. 1. However, in this implementation manner, some components in the existing media processing system need to be modified, and the modification of the media processing system is implemented at a high price such as a cost and time.

### SUMMARY

Embodiments of the present invention provide a video information processing method and device, so as to implement postprocessing on a video frame without greatly modifying a media processing system, and reduce a price for implementing the video postprocessing, such as a cost and time.

A first aspect provides a video information processing method, including:
receiving, by a video information processing apparatus, a compressed code stream transmitted by a player;
transmitting, by the video information processing apparatus, the compressed code stream to a decoder;
decoding, by the decoder, the compressed code stream to obtain a video frame, and providing the video frame for the video information processing apparatus;
transmitting, by the video information processing apparatus, the video frame that is obtained by the decoder by means of the decoding to a postprocessing unit; and
performing, by the postprocessing unit, postprocessing on the video frame, and providing the postprocessed video frame for the player, where the postprocessed video frame is transmitted by the player to a display unit for displaying.

With reference to the first aspect, in a first possible implementation manner of the first aspect, the receiving, by a video information processing apparatus, a compressed code stream transmitted by a player includes:
receiving, by the video information processing apparatus, the compressed code stream transmitted by the player by means of a first interface format, where the first interface format is an interface format supported by the player; and
the transmitting, by the video information processing apparatus, the compressed code stream to a decoder includes:
   switching, by the video information processing apparatus, an interface format used to transmit the compressed code stream from the first interface format to a second interface format, and transmitting the compressed code stream to the decoder by means of the second interface format, where the second interface format is an interface format supported by the decoder.

With reference to the first possible implementation manner of the first aspect, in a second possible implementation manner of the first aspect, after the transmitting, by the video information processing apparatus, the compressed code stream to the decoder by means of the second interface format, the method further includes:
receiving, by the video information processing apparatus, a first notification message transmitted by the decoder by means of the second interface format; and
switching, by the video information processing apparatus, an interface format used to transmit the first notification message from the second interface format to the first interface format, and transmitting the first notification message to the player by means of the first interface format, where the first notification message is used to indicate that the decoding is complete.

With reference to the first possible implementation manner of the first aspect or the second possible implementation manner of the first aspect, in a third possible implementation manner of the first aspect, the transmitting, by the video information processing apparatus, the video frame that is obtained by the decoder by means of the decoding to a postprocessing unit includes:
receiving, by the video information processing apparatus, the video frame output by the decoder, and receiving memory description information transmitted by the player; and
transmitting, by the video information processing apparatus, the video frame and the memory description information to the postprocessing unit; and
the performing, by the postprocessing unit, postprocessing on the video frame, and providing the postprocessed video frame for the player includes:
   performing, by the postprocessing unit, the postprocessing on the video frame, and storing the postprocessed video frame into a memory indicated by the memory description information, where the postprocessed video frame is read by the player from the memory.

With reference to the third possible implementation manner of the first aspect, in a fourth possible implementation manner of the first aspect, after the transmitting, by the video information processing apparatus, the video frame and the memory description information to the postprocessing unit, the method further includes:
receiving, by the video information processing apparatus, a second notification message transmitted by the postprocessing unit by means of a third interface format, where the third interface format is an interface format supported by the postprocessing unit; and
switching, by the video information processing apparatus, an interface format used to transmit the second notification message from the third interface format to the first interface format, and transmitting the second notification message to the player by means of the first interface format, where the second notification message is used to indicate that the postprocessing is complete.

With reference to the first possible implementation manner of the first aspect, the second possible implementation manner of the first aspect, the third possible implementation manner of the first aspect or the fourth possible implementation manner of the first aspect, in a fifth possible implementation manner of the first aspect, the first interface format is a standard decoder interface format, and the second interface format is a proprietary decoder interface format.

A second aspect provides a video decoding device, including a video information processing apparatus, a decoder, and a postprocessing unit, where:
the video information processing apparatus is configured to receive a compressed code stream transmitted by a player, transmit the compressed code stream to the decoder, receive, from the decoder, a video frame that is obtained by the decoder by means of decoding, and transmit the video frame to the postprocessing unit;
the decoder is configured to decode the compressed code stream to obtain the video frame, and provide the video frame for the video information processing apparatus; and
the postprocessing unit is configured to perform postprocessing on the video frame transmitted by the video information processing apparatus, and provide the postprocessed video frame for the player, where the postprocessed video frame is transmitted by the player to a display unit for displaying.

With reference to the second aspect, in a first possible implementation manner of the second aspect, the video information processing apparatus is specifically configured to receive the compressed code stream transmitted by the player by means of a first interface format, where the first interface format is an interface format supported by the player;
the video information processing apparatus is further configured to switch an interface format used to transmit the compressed code stream from the first interface format to a second interface format, where the second interface format is an interface format supported by the decoder; and
the video information processing apparatus is specifically configured to transmit the compressed code stream to the decoder by means of the second interface format.

With reference to the first possible implementation manner of the second aspect, in a second possible implementation manner of the second aspect, the video information processing apparatus is further configured to: after the compressed code stream is transmitted to the decoder by means of the second interface format, receive a first notification message transmitted by the decoder by means of the second interface format, switch an interface format used to transmit the first notification message from the second interface format to the first interface format, and transmit the first notification message to the player by means of the first interface format, where the first notification message is used to indicate that the decoding is complete.

With reference to the first possible implementation manner of the second aspect or the second possible implementation manner of the second aspect, in a third possible implementation manner of the second aspect, the video information processing apparatus is further configured to: before the video frame that is obtained by the decoder by means of the decoding is transmitted to the postprocessing unit, receive memory description information transmitted by the player, and transmit the memory description information to the postprocessing unit; and
the postprocessing unit is specifically configured to perform postprocessing on the video frame, and store the postprocessed video frame into a memory indicated by the memory description information, where the postprocessed video frame is read by the player from the memory.

With reference to the third possible implementation manner of the second aspect, in a fourth possible implementation manner of the second aspect, the video information processing apparatus is further configured to: after the video frame and the memory description information are transmitted to the postprocessing unit, receive a second notification message transmitted by the postprocessing unit by means of a third interface format, switch an interface format used to transmit the second notification message from the third interface format to the first interface format, and transmit the second notification message to the player by means of the first interface format, where the third interface format is an interface format supported by the postprocessing unit, and the second notification message is used to indicate that the postprocessing is complete.

With reference to the first possible implementation manner of the second aspect, the second possible implementation manner of the second aspect, the third possible implementation manner of the second aspect or the fourth possible implementation manner of the second aspect, in a fifth possible implementation manner of the second aspect, the first interface format is a standard decoder interface format, and the second interface format is a proprietary decoder interface format.

According to the video information processing method and device provided in embodiments of the present invention, a video information processing apparatus receives a compressed code stream transmitted by a player, transmits the compressed code stream to a decoder, so that the decoder performs decoding to obtain a video frame and then the video frame obtained by the decoder by means of decoding is transmitted to a postprocessing unit for postprocessing, and the postprocessing unit provides the postprocessed video frame for the player. It can be learned from analysis that: in the embodiments of the present invention, a video postprocessing apparatus changes a direction of the video frame obtained by means of the decoding, so that the video frame obtained by means of the decoding is sent to the postprocessing unit following the decoder; the postprocessing unit following the decoder performs postprocessing on the video frame obtained by means of the decoding. This is equivalent to integration of the decoder with the postprocessing unit. Therefore, the postprocessing is transparent to the player; then, it is unnecessary to modify the player and the decoder, other components in a media processing system are not affected either, and the postprocessing on the video frame is implemented without greatly modifying the media processing system, thereby reducing a price for implementing the video postprocessing, such as a cost and time.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic structural diagram of a media processing system in the prior art;
FIG. 2 is a schematic structural diagram of a media processing system according to an embodiment of the present invention;
FIG. 3 is a schematic structural diagram of a video decoding device according to an embodiment of the present invention;
FIG. 4a is a flowchart of a video information processing method according to an embodiment of the present invention;
FIG. 4b is a flowchart of another video information processing method according to an embodiment of the present invention;
FIG. 5 is a flowchart of still another video information processing method according to an embodiment of the present invention;
FIG. 6 is a schematic diagram of information exchange between a video decoding device and a player based on an OpenMax IL interface format according to an embodiment of the present invention; and
FIG. 7 is a schematic structural diagram of another video decoding device according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

In view of problems to be resolved by this application, an embodiment of the present invention provides a new media processing system. A structure of the media processing system is shown in FIG. 2, and the media processing system primarily includes a player 21, a media source processing unit 22, a video decoding device 23, and a display unit 24. The video decoding device 23 is primarily integrated with a decoder and a postprocessing unit, implements decoding for a compressed code stream on the one hand and implements video postprocessing after the decoding on the other hand, and also resolves various problems of implementing the video postprocessing in the prior art.

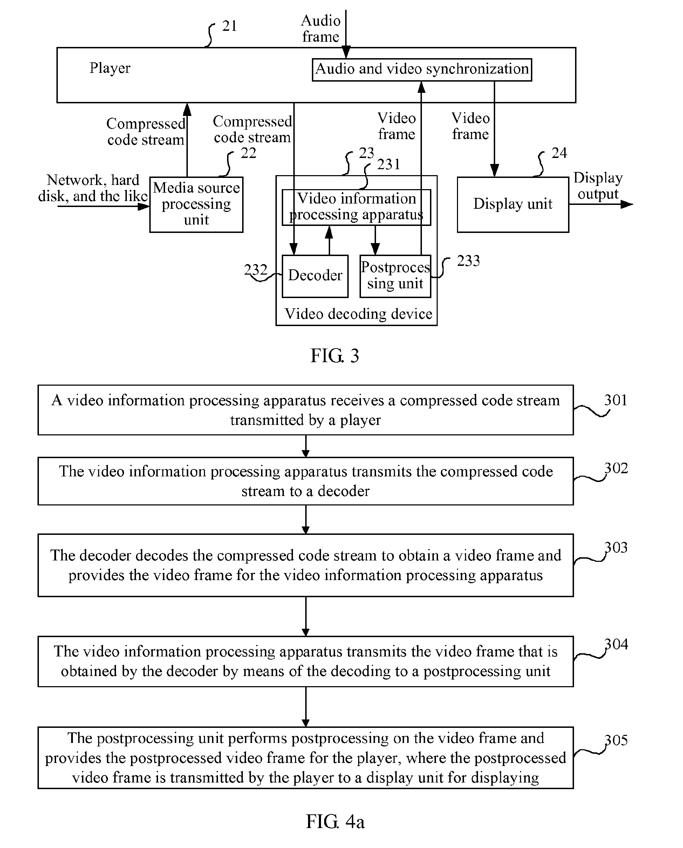

In an optional implementation manner, as shown in FIG. 3, an implementation structure of the video decoding device 23 includes a video information processing apparatus 231, a decoder 232, and a postprocessing unit 233. The decoder 232 primarily implements the decoding for the compressed code stream, the postprocessing unit 233 primarily implements a video postprocessing function after the decoding, and the video information processing apparatus 231 is primarily used to resolve various problems generated due to implementation of the video postprocessing function in the prior art. FIG. 3 shows connection relationships between the player 21, the media source processing unit 22, the video information processing apparatus 231, the decoder 232, the postprocessing unit 233, and the display unit 24.

Based on the foregoing media processing system, the following embodiment of the present invention provides a video information processing method. As shown in FIG. 4a, the video information processing method includes the following steps:

301. A video information processing apparatus receives a compressed code stream transmitted by a player.

302. The video information processing apparatus transmits the compressed code stream to a decoder.

303. The decoder decodes the compressed code stream to obtain a video frame and provides the video frame for the video information processing apparatus.

304. The video information processing apparatus transmits the video frame that is obtained by the decoder by means of the decoding to a postprocessing unit.

305. The postprocessing unit performs postprocessing on the video frame and provides the postprocessed video frame for the player, where the postprocessed video frame is transmitted by the player to a display unit for displaying.

In this embodiment, a video information processing apparatus is located between a player and a decoder, and is primarily responsible for information transmission between the player and the decoder. Specifically, the video information processing apparatus provides a compressed code stream from the player for the decoder; the decoder decodes the compressed code stream provided by the video information processing apparatus and provides a video frame that is obtained by the decoder by means of the decoding to the video information processing apparatus; the video information processing apparatus transmits the video frame that is obtained by the decoder by means of the decoding to a postprocessing unit; the postprocessing unit performs postprocessing on the video frame and provides it for the player. In the prior art, the video frame is directly sent to the player after being output from the decoder; in this embodiment, however, the video information processing apparatus sends the video frame to the postprocessing unit following the decoder, so as to implement postprocessing on the video frame, and then the postprocessing unit provides the postprocessed video frame for the player. This is equivalent to integration of the decoder with the postprocessing unit. Therefore, the postprocessing is transparent to the player; then, it is unnecessary to modify the player and the decoder, other components in a media processing system are not affected either, and the postprocessing on the video frame is implemented without greatly modifying the media processing system, thereby reducing a price for implementing the video postprocessing, such as a cost and time.

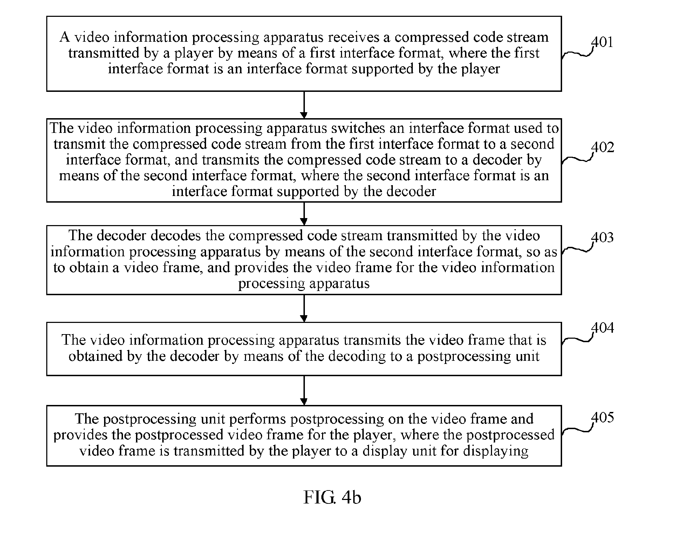

Considering that the player and the decoder may support a same interface format and may also support different interface formats, the following embodiment of the present invention provides another video information processing method. As shown in FIG. 4b, the method includes the following steps:

401. A video information processing apparatus receives a compressed code stream transmitted by a player by means of a first interface format, where the first interface format is an interface format supported by the player.

402. The video information processing apparatus switches an interface format used to transmit the compressed code stream from the first interface format to a second interface format, and transmits the compressed code stream to a decoder by means of the second interface format, where the second interface format is an interface format supported by the decoder.

403. The decoder decodes the compressed code stream is transmitted by the video information processing apparatus by means of the second interface format, so as to obtain a video frame, and provides the video frame for the video information processing apparatus.

404. The video information processing apparatus transmits the video frame that is obtained by the decoder by means of the decoding to a postprocessing unit.

405. The postprocessing unit performs postprocessing on the video frame and provides the postprocessed video frame for the player, where the postprocessed video frame is transmitted by the player to a display unit for displaying.

In this embodiment, the compressed code stream transmitted by the player is transmitted in an interface format supported by the player (that is, the compressed code stream is transmitted by means of the first interface format), and the compressed code stream is not directly transmitted to the decoder in the same way as that in the prior art, but is transmitted to the video information processing apparatus. After receiving the compressed code stream transmitted by the player by means of an interface format supported by the player, the video information processing apparatus switches the interface format used to transmit the compressed code stream to an interface format supported by the decoder, that is, the second interface format. Subsequently, the video information processing apparatus transmits the compressed code stream to the decoder by means of the second interface format. Therefore, it can be seen that: in this embodiment, the video information processing apparatus is added between the player and the decoder, and the video information processing apparatus switches the interface format used for transmitting the compressed code stream between the player and the decoder, so that the player and the decoder can use the interface format supported by themselves and the player and the decoder do not need to be modified due to a difference between the supported interface formats.

Generally, the interface format supported by the player is a standard decoder interface format, and the interface format supported by the decoder is generally a proprietary decoder interface format. The video information processing apparatus switches the interface format between the player and the decoder. This is equivalent to provision of a unified standard decoder interface for the outside, so that neither the player nor the decoder needs to be modified for a purpose of implementing postprocessing. It should be noted that the switching of the interface format is covered by the prior art; by referring to a corresponding switching manner in the prior art, the video information processing apparatus may implement switching of the interface format according to the interface formats supported by the player and the decoder.

The decoder receives the compressed code stream transmitted by the video information processing apparatus by means of the second interface format, performs decoding processing on the received compressed code stream to obtain the video frame, and transmits the video frame obtained by means of the decoding to the video information processing apparatus; then, the video information processing apparatus transmits the video frame to the postprocessing unit. After receiving the video frame transmitted by the video information processing apparatus, the postprocessing unit performs the postprocessing on the video frame and provides the postprocessed video frame for the player, thereby implementing the postprocessing on the video frame.

It should be noted that: in this embodiment of the present invention, processing performed on the video frame after the decoding is called postprocessing. Postprocessing operations performed by the postprocessing unit on the video frame include but are not limited to at least one of: deblocking, deringing, color enhancement, contrast enhancement, definition enhancement, and deinterlacing.

It can be learned from the foregoing description that: in this embodiment of the present invention, in fact, a video information processing apparatus is added between a player and a decoder; on the one hand, an interface format used for transmitting a compressed code stream between the player and the decoder is converted to provide a standard decoder interface for the outside; on the other hand, a direction of a video frame obtained by the decoder by means of decoding is changed, so that the video frame is sent to a postprocessing unit following the decoder to implement postprocessing, and the postprocessed video frame is provided for the player. This is equivalent to integration of a video postprocessing function with the decoder. Therefore, the video postprocessing is transparent to the player; then, it is unnecessary to modify the player and the decoder, thereby resolving a problem where open source is required when a media processing system is modified, and reducing a price for implementing the video postprocessing, such as a cost and time.

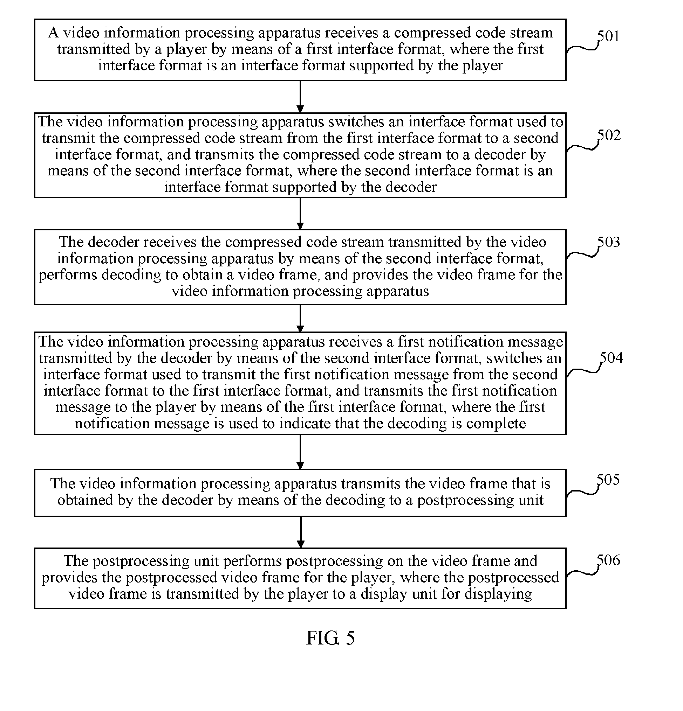

FIG. 5 is a flowchart of still another video information processing method according to an embodiment of the present invention. As shown in FIG. 5, the video information processing method includes the following steps:
501. A video information processing apparatus receives a compressed code stream transmitted by a player by means of a first interface format, where the first interface format is an interface format supported by the player.
502. The video information processing apparatus switches an interface format used to transmit the compressed code stream from the first interface format to a second interface format, and transmits the compressed code stream to a decoder by means of the second interface format, where the second interface format is an interface format supported by the decoder.
503. The decoder receives the compressed code stream transmitted by the video information processing apparatus by means of the second interface format, performs decoding to obtain a video frame, and provides the video frame for the video information processing apparatus.
504. The video information processing apparatus receives a first notification message transmitted by the decoder by means of the second interface format, switches an interface format used to transmit the first notification message from the second interface format to the first interface format, and transmits the first notification message to the player by means of the first interface format, where the first notification message is used to indicate that the decoding is complete.
505. The video information processing apparatus transmits the video frame that is obtained by the decoder by means of the decoding to a postprocessing unit.
506. The postprocessing unit performs postprocessing on the video frame and provides the postprocessed video frame for the player, where the postprocessed video frame is transmitted by the player to a display unit for displaying.

It should be noted that: for description of steps 501, 502, 503, 505, and 506, reference may be made to the description of steps 401 to 405, and details are not described herein again. In addition, an order of step 504 and step 505 is not limited to that shown in FIG. 5.

In this embodiment, after the video information processing apparatus transmits the compressed code stream to the decoder by means of the second interface format, the decoder performs decoding processing on the received compressed code stream; after the decoding processing is complete, the decoder sends a message to the player by using the video information processing apparatus, where the message indicates that the decoding is complete. Specifically, the decoder transmits the first notification message to the video information processing apparatus by means of the second interface format supported by the decoder, and the video information processing apparatus switches the interface format used to transmit the first notification message to the first interface format supported by the player. Subsequently, the video information processing apparatus sends the first notification message to the player by means of the first interface format supported by the player, so that the player can learn, based on the first notification message, that the decoder finishes decoding the current compressed code stream. Optionally, if the player still has a subsequent compressed code stream that needs to be decoded, the player may continue to provide the subsequent compressed code stream for the decoder by using the video information processing apparatus after receiving the first notification message. It should be noted that: the first notification message here is actually a notification message; in order to differentiate it from other subsequent notification messages, the notification message is preceded by "first", where the "first" restricts neither an order nor a quantity.

Based on the method embodiments shown in FIG. 4a, FIG. 4b, or FIG. 5, in an optional implementation manner, that the video information processing apparatus transmits the video frame that is obtained by the decoder by means of the decoding to a postprocessing unit includes:
receiving, by the video information processing apparatus, the video frame output by the decoder, receiving memory description information transmitted by the player; and transmitting the video frame and the memory description information to the postprocessing unit.

Accordingly, that the postprocessing unit performs postprocessing on the video frame and provides the postprocessed video frame for the player includes:
performing, by the postprocessing unit, the postprocessing on the video frame, and storing the postprocessed video frame into a memory indicated by the memory description information, where the postprocessed video frame is read by the player from the memory.

Optionally, before transmitting the memory description information to the postprocessing unit, the video information processing apparatus may switch an interface format used to transmit the memory description information from the interface format supported by the player to an interface format supported by the postprocessing unit, and then transmit the memory description information to the postprocessing unit by means of the interface format after switching.

In this implementation manner, the player not only provides the compressed code stream for the decoder, but also provides the memory description information for the postprocessing unit, where the memory description information is used to indicate storing of the postprocessed video frame. Similarly, the player does not directly communicate with the postprocessing unit, but communicates with the postprocessing unit by using the video information processing apparatus. The video information processing apparatus receives the memory description information provided by the player, and provides the memory description information for the postprocessing unit; the postprocessing unit determines, according to the memory description information, memory space that is used to store the postprocessed video frame. The postprocessing unit receives the video frame and the memory description information that are transmitted by the video information processing apparatus; on the one hand, the postprocessing unit performs the postprocessing on the video frame; on the other hand, according to the memory description information, the postprocessing unit determines a memory that is used to store the postprocessed video frame; further, the postprocessing unit stores the postprocessed video frame into the determined memory. In this way, the player can read the postprocessed video frame from the memory indicated by the memory description information, and play the video frame.

A process in which the video information processing apparatus provides the video frame obtained by the decoder by means of the decoding for the postprocessing unit may be the same as or different from a process of providing the memory description information for the postprocessing unit. Further, if the process in which the video information processing apparatus provides the video frame obtained by the decoder by means of the decoding for the postprocessing unit is different from the process of providing the memory description information for the postprocessing unit, an order of the two processes is not limited.

Based on the foregoing optional implementation manner, further optionally, after transmitting the video frame and the memory description information to the postprocessing unit, the video information processing apparatus may further receive a second notification message transmitted by the postprocessing unit by means of a third interface format, then switch an interface format used to transmit the second notification message from the third interface format to the first interface format, and transmit the second notification message to the player by means of the first interface format supported by the player, where the second notification message is used to indicate that the postprocessing is complete.

In this implementation manner, after the video information processing apparatus transmits the video frame and the memory description information to the postprocessing unit, the postprocessing unit performs the postprocessing on the received video frame; after the postprocessing is complete, the postprocessing unit sends a message to the player by using the video information processing apparatus, where the message indicates that the postprocessing is complete. Specifically, the postprocessing unit transmits the second notification message to the video information processing apparatus by means of the third interface format supported by the postprocessing unit, and the video information processing apparatus switches the interface format used to transmit the second notification message to the first interface format supported by the player. Subsequently, the video information processing apparatus sends the second notification message to the player by means of the first interface format supported by the player, so that the player learns, based on the second notification message, that the postprocessing unit finishes performing the postprocessing on the current video frame. Optionally, after receiving the second notification message, the player may read the postprocessed video frame from the memory indicated by the memory description information. It should be noted that: the second notification message here is actually a notification message; in order to differentiate it from the first notification message, the notification message is preceded by "second", where the "second" restricts neither an order nor a quantity.

In this embodiment of the present invention, no limitation is imposed on the interface format supported by the player, the interface format supported by the decoder, and the interface format supported by the postprocessing unit. Generally, the interface format supported by the player is a standard decoder interface format, and the interface format supported by the decoder is a proprietary decoder interface format. Generally, the interface format supported by the player is different from the interface format supported by the decoder. However, the technical solutions of the present invention are also applicable to an application scenario in which the interface format supported by the player is the same as the interface format supported by the decoder.

An implementation manner of the interface in this embodiment of the present invention may be open media acceleration (Open Media Acceleration, OpenMax for short). The OpenMax is an application programming interface (Application Programming Interface, API for short) developed by Khronos Group (Khronos Group), and the player and the decoder that are based on an OpenMax interface can be interconnected quickly. The OpenMax interface has become a standard in the industry, and plenty of media processing systems support access to the decoder through the OpenMax interface. The OpenMax defines three layers of API interfaces: an application level (Application Level, AL for short) interface, an integration level (Integration Level, IL) interface, and a development level (Development Level, DL for short) interface. The IL interface is the most commonly used interface in the industry. The following embodiment describes the technical solutions of the present invention in detail by using an example in which both a player and a decoder support an OpenMax IL interface format. It should be noted that this implementation manner does not involve an issue of switching an interface format.

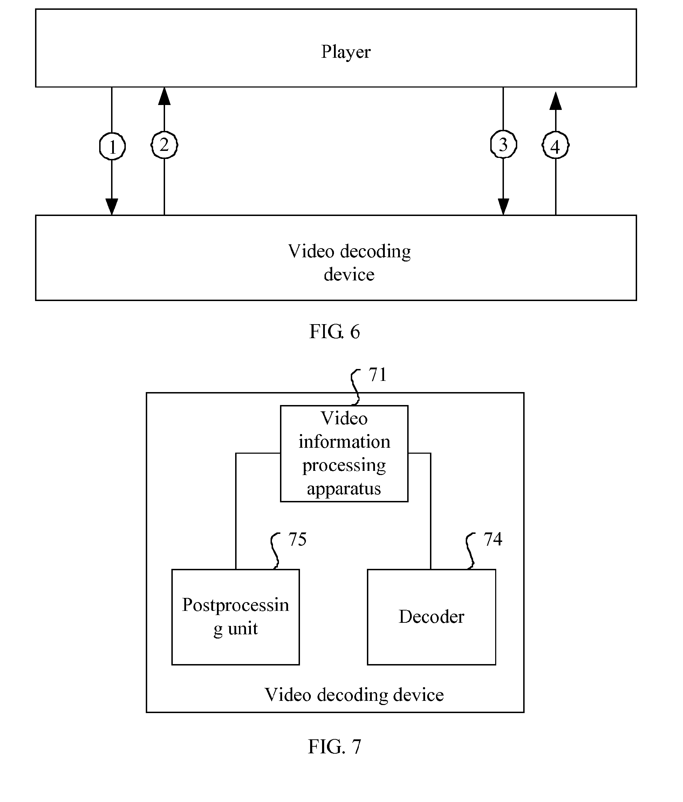

Using the OpenMax IL interface format as an example, information exchange between a video decoding device and a player in this embodiment of the present invention may be sorted into four types, namely, ① to ④ in FIG. 6:
① information exchange in which the player sends a compressed code stream to the video decoding device and the player actively invokes an OMX_EmptyThisBuffer() interface provided by the video decoding device;
② information exchange in which the video decoding device reports that decoding of the code stream is complete and the video decoding device invokes an EmpbyBufferDone() interface provided by the player;
③ information exchange in which the player provides the video decoding device with memory description information that is used to store a video frame obtained by means of the decoding and the player actively invokes an OMX_FillThisBuffer() interface provided by the video decoding device; and
④ information exchange in which the video decoding device reports that postprocessing on the video frame is complete and notifies that the player may use the postprocessed video frame and the video decoding device invokes a FillBufferDone() interface provided by the player.

In this embodiment, the video postprocessing and the video decoder are encapsulated together to form the video decoding device, and this video decoding device provides an OpenMax IL interfacefor the outside, thereby completely retaining a behavior pattern of an OpenMax IL decoder. FIG. 3 shows an implementation structure of the video decoding device. A process in which the video decoding device processes video information is as follows:

The player prepares a compressed code stream and invokes OMX_EmptyThisBuffer() provided by the player to transmit the compressed code stream to a video information processing apparatus; the video information processing apparatus invokes OMX_EmptyThisBuffer() provided by the decoder to transmit the compressed code stream to the decoder.

In addition, the player invokes OMX_FillThisBuffer() to transmit the memory description information to the video information processing apparatus, where the memory description information indicates a free memory that is used to store the postprocessed video frame, and the video information processing apparatus records the memory description information transmitted each time by the player by means of OMX_FillThisBuffer().

The decoder decodes the received compressed code stream and notifies the video information processing apparatus after completing the decoding, and the video information processing apparatus notifies the player of decoding completion by invoking EmptyBufferDone() provided by the player.

After obtaining the video frame by means of the decoding, the decoder outputs the video frame to the video information processing apparatus, and the video information processing apparatus obtains corresponding memory description information from the recorded memory description information and then transmits the video frame obtained by the decoder by means of the decoding and the obtained memory description information to a postprocessing unit through an interface of the postprocessing unit, so as to start the postprocessing unit.

The postprocessing unit performs postprocessing on the video frame, stores the postprocessed video frame into the memory supported by the memory description information, and then notifies the video information processing apparatus that the postprocessing is complete. The video information processing apparatus notifies the player that the postprocessing is complete through the FillBufferDone() interface provided by the player, so that the player reads the postprocessed video frame and performs subsequent processing, where the subsequent processing generally refers to audio and video synchronization and displaying.

It can be learned from the foregoing description that: in the video information processing method according to this embodiment of the present invention, a video information processing apparatus changes a direction of a video frame obtained by a decoder by means of decoding and sends the video frame to a postprocessing unit following the decoder; the postprocessing unit following the decoder performs postprocessing on the video frame obtained by means of the decoding, so that a process of postprocessing the video frame is implemented; then the postprocessed video frame is provided for the player. Therefore, the video postprocessing is transparent to the player, and the postprocessing on the video frame may be implemented without greatly modifying a media processing system, thereby reducing a price for implementing the video postprocessing, such as a cost and time.

Generally, the interface format of the decoder is decided by each specific vendor and varies. A common decoder interface format is DecodeFrame (decoding a code stream, decoding status). An application program (such as a specific playing program) keeps invoking a DecodeFrame() function, and the number of code streams consumed each time and information indicating whether any frame is output are reported in the "decoding status". In this way, the application program keeps feeding code streams and taking away frames obtained by decoding, thereby implementing a video decoding function.

Assuming that the decoder uses the foregoing interface format and the player uses the OpenMax IL interface format, the video information processing apparatus needs to switch the interface format between the proprietary interface format and the OpenMax IL interface format, and a process in which the video information processing apparatus processes video information may be as follows:
1. The player invokes OMX_EmptyThisBuffer() to feed a compressed code stream to the video information processing apparatus, and uses OMX_FillThisBuffer() to provide the video information processing apparatus with memory description information indicating a memory that is used to store the frame obtained by means of the decoding, where OMX_EmptyThisBuffer(), OMX_FillThisBuffer(), and the like are equivalent to a first interface format supported by the player.
2. The video information processing apparatus switches an interface format used to transmit the compressed code stream and the memory description information to DecodeFrame(), and invokes DecodeFrame() to decode the compressed code stream fed by using OMX_EmptyThisBuffer(), where DecodeFrame() is equivalent to a second interface format supported by the decoder.
3. After the DecodeFrame() function returns a result, the video information processing apparatus performs the following operations according to the returned result: if the "decoding status" returned by DecodeFrame() reports that decoding of the fed compressed code stream is complete, returning an OMX_EmptyThisBufferDone() event to the player to notify the player that this compressed code stream has been processed; if the "decoding status" returned by DecodeFrame() reports that a video frame obtained by means of the decoding can be output, using an interface of the postprocessing unit to transmit the video frame obtained by the decoder by means of the decoding and the obtained memory description information to the postprocessing unit, so as to start the postprocessing unit; after the postprocessing unit finishes processing, sending an OMX_FillThisBufferDone() event to the player to notify the player that a frame obtained by means of the decoding is output.

The foregoing steps 1 to 3 are performed cyclically until the decoding of the compressed code stream is complete.

FIG. 7 is a schematic structural diagram of another video decoding device according to an embodiment of the present invention. As shown in FIG. 7, the video decoding device includes a video information processing apparatus 71, a decoder 74, and a postprocessing unit 75.

The video information processing apparatus 71 is configured to receive a compressed code stream transmitted by a player, transmit the compressed code stream to the decoder 74, receive, from the decoder 74, a video frame that is obtained by the decoder 74 by means of decoding, and transmit the video frame obtained by the decoder 74 by means of the decoding to the postprocessing unit 75.

The decoder 74 is configured to decode the compressed code stream transmitted by the video information processing apparatus 71, so as to obtain a video frame, and provide the video frame for the video information processing apparatus 71.

The postprocessing unit 75 is configured to perform postprocessing on the video frame transmitted by the video information processing apparatus 71, and provide the postprocessed video frame for the player, where the postprocessed video frame is transmitted by the player to a display unit for displaying.

In an optional implementation manner, the video information processing apparatus 71 is specifically configured to receive a compressed code stream transmitted by the player by means of a first interface format, where the first interface format is an interface format supported by the player.

Further, after receiving the compressed code stream transmitted by the player by means of the first interface format, the video information processing apparatus 71 is further configured to switch an interface format used to transmit the compressed code stream from the first interface format to a second interface format, where the second interface format is an interface format supported by the decoder 74. Therefore, the video information processing apparatus 71 is specifically configured to transmit the compressed code stream to the decoder 74 by means of the second interface format.

In an optional implementation manner, the video information processing apparatus 71 is further configured to: after the compressed code stream is transmitted to the decoder by means of the second interface format, receive a first notification message transmitted by the decoder by means of the second interface format; and switch an interface format used to transmit the first notification message from the second interface format to the first interface format, and transmit the first notification message to the player by means of the first interface format, where the first notification message is used to indicate that the decoding is complete.

In an optional implementation manner, the video information processing apparatus 71 is further configured to: before the video frame that is obtained by the decoder 74 by means of the decoding is transmitted to the postprocessing unit 75, receive memory description information transmitted by the player, and transmit the memory description information to the postprocessing unit 75.

Therefore, the postprocessing unit 75 is specifically configured to perform postprocessing on the video frame, and store the postprocessed video frame into a memory indicated by the memory description information, where the postprocessed video frame is read by the player from the memory indicated by the memory description information.

In an optional implementation manner, the video information processing apparatus 71 is further configured to: after transmitting the video frame and the memory description information to the postprocessing unit 75, receive a second notification message transmitted by the postprocessing unit 75 by means of a third interface format, switch an interface format used to transmit the second notification message from the third interface format to the first interface format, and transmit the second notification message to the player by means of the first interface format, where the third interface format is an interface format supported by the postprocessing unit, and the second notification message is used to indicate that the postprocessing is complete.

In an optional implementation manner, the first interface format used by the player may be a standard decoder interface format, such as an OpenMax IL interface format, but it is not limited thereto. The second interface format used by the decoder is generally a proprietary decoder interface format.

The video decoding device according to this embodiment can be used to implement a process of the foregoing method embodiment, and working principles of the device and its internal components are not described herein again. For details, reference may be made to the description of the method embodiment.

The video information processing apparatus 71, the decoder 74, and the postprocessing unit 75 may be implemented by using logical integrated circuits. Specifically, all functions of the video information processing apparatus 71, the decoder 74, and the postprocessing unit 75 may be implemented by hardware alone, that is, by algorithms executed by the logical integrated circuits alone. Optionally, all functions of the video information processing apparatus 71, the decoder 74, and the postprocessing unit 75 may be implemented by software in combination with hardware, that is, the logical integrated circuits may implement the functions by executing operations as driven by driver software.

On the one hand, the video decoding device according to this embodiment switches an interface format between a player and a decoder to provide a unified interface format for the outside; on the other hand, the video decoding device changes a direction of a video frame obtained by the decoder by means of decoding, so that the video frame is sent to a postprocessing unit following the decoder to implement postprocessing, and the postprocessed video frame is provided for the player. This is equivalent to integration of the decoder with the postprocessing unit. Therefore, the postprocessing is transparent to the player; then, it is unnecessary to modify the player and the decoder, other components in a media processing system are not affected either, and the postprocessing on the video frame is implemented without modifying the media processing system, thereby reducing a price for implementing the video postprocessing, such as a cost and time.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A video information processing method, comprising:
receiving, by a video information processing apparatus, a compressed code stream transmitted by a player;
transmitting, by the video information processing apparatus, the compressed code stream to a decoder;
decoding, by the decoder, the compressed code stream to obtain a video frame, and providing the video frame for the video information processing apparatus;
transmitting, by the video information processing apparatus, the video frame that is obtained by the decoder by means of the decoding to a postprocessing unit; and
performing, by the postprocessing unit, postprocessing on the video frame, and providing the postprocessed video frame for the player, wherein the postprocessed video frame is transmitted by the player to a display unit for displaying.

2. The method according to claim 1, wherein the receiving, by a video information processing apparatus, a compressed code stream transmitted by a player comprises:
receiving, by the video information processing apparatus, the compressed code stream transmitted by the player by means of a first interface format, wherein the first interface format is an interface format supported by the player; and
the transmitting, by the video information processing apparatus, the compressed code stream to a decoder comprises:
switching, by the video information processing apparatus, an interface format used to transmit the compressed code stream from the first interface format to a second interface format, and transmitting the compressed code stream to the decoder by means of the second interface format, wherein the second interface format is an interface format supported by the decoder.

3. The method according to claim 2, wherein after the transmitting, by the video information processing apparatus, the compressed code stream to the decoder by means of the second interface format, the method further comprises:
receiving, by the video information processing apparatus, a first notification message transmitted by the decoder by means of the second interface format; and
switching, by the video information processing apparatus, an interface format used to transmit the first notification message from the second interface format to the first interface format, and transmitting the first notification message to the player by means of the first interface format, wherein the first notification message is used to indicate that the decoding is complete.

4. The method according to claim 2 or 3, wherein the transmitting, by the video information processing apparatus, the video frame that is obtained by the decoder by means of the decoding to a postprocessing unit comprises:
receiving, by the video information processing apparatus, the video frame output by the decoder, and receiving memory description information transmitted by the player; and
transmitting, by the video information processing apparatus, the video frame and the memory description information to the postprocessing unit; and
the performing, by the postprocessing unit, postprocessing on the video frame, and providing the postprocessed video frame for the player comprises:
performing, by the postprocessing unit, the postprocessing on the video frame, and storing the postprocessed video frame into a memory indicated by the memory description information, wherein the postprocessed video frame is read by the player from the memory.

5. The method according to claim 4, wherein after the transmitting, by the video information processing apparatus, the video frame and the memory description information to the postprocessing unit, the method further comprises:
receiving, by the video information processing apparatus, a second notification message transmitted by the postprocessing unit by means of a third interface format, wherein the third interface format is an interface format supported by the postprocessing unit; and
switching, by the video information processing apparatus, an interface format used to transmit the second notification message from the third interface format to the first interface format, and transmitting the second notification message to the player by means of the first interface format, wherein the second notification message is used to indicate that the postprocessing is complete.

6. The method according to any one of claims 2 to 5, wherein the first interface format is a standard decoder interface format, and the second interface format is a proprietary decoder interface format.

7. A video decoding device, comprising a video information processing apparatus, a decoder, and a postprocessing unit, wherein:
the video information processing apparatus is configured to receive a compressed code stream transmitted by a player, transmit the compressed code stream to the decoder, receive, from the decoder, a video frame that is obtained by the decoder by means of decoding, and transmit the video frame to the postprocessing unit;
the decoder is configured to decode the compressed code stream to obtain the video frame, and provide the video frame for the video information processing apparatus; and
the postprocessing unit is configured to perform postprocessing on the video frame transmitted by the video information processing apparatus, and provide the postprocessed video frame for the player, wherein the postprocessed video frame is transmitted by the player to a display unit for displaying.

8. The device according to claim 7, wherein the video information processing apparatus is specifically configured to receive the compressed code stream transmitted by the player by means of a first interface format, wherein the first interface format is an interface format supported by the player;
the video information processing apparatus is further configured to switch an interface format used to transmit the compressed code stream from the first interface format to a second interface format, wherein the second interface format is an interface format supported by the decoder; and
the video information processing apparatus is specifically configured to transmit the compressed code stream to the decoder by means of the second interface format.

9. The device according to claim 8, wherein:
the video information processing apparatus is further configured to: after the compressed code stream is transmitted to the decoder by means of the second interface format, receive a first notification message transmitted by the decoder by means of the second interface format; and switch an interface format used to transmit the first notification message from the second interface format to the first interface format, and transmit the first notification message to the player by means of the first interface format, wherein the first notification message is used to indicate that the decoding is complete.

10. The device according to claim 8 or 9, wherein:
the video information processing apparatus is further configured to: before the video frame that is obtained by the decoder by means of the decoding is transmitted to the postprocessing unit, receive memory description information transmitted by the player, and transmit the memory description information to the postprocessing unit; and
the postprocessing unit is specifically configured to perform postprocessing on the video frame, and store the postprocessed video frame into a memory indicated by the memory description information, wherein the postprocessed video frame is read by the player from the memory.

11. The device according to claim 10, wherein:
the video information processing apparatus is further configured to: after the video frame and the memory description information are transmitted to the postprocessing unit, receive a second notification message transmitted by the postprocessing unit by means of a third interface format, switch an interface format used to transmit the second notification message from the third interface format to the first interface format, and transmit the second notification message to the player by means of the first interface format, wherein the third interface format is an interface format supported by the postprocessing unit, and the second notification message is used to indicate that the postprocessing is complete.

12. The device according to any one of claims 8 to 11, wherein the first interface format is a standard decoder interface format, and the second interface format is a proprietary decoder interface format.
